# EUROPÄISCHE PATENTSCHRIFT

(11) **EP 0 449 127 B1**
(45) Veröffentlichungstag und Bekanntmachung des Hinweises auf die Patenterteilung: **28.12.1994**
(21) Anmeldenummer: 91104499.8
(22) Anmeldetag: 22.03.1991
(51) Int. Cl.: H05B 41/29

(54) **Schaltungsanordnung zum Betrieb einer Leuchtstofflampe aus einer Gleichspannungsquelle**
Circuit for operating a fluorescent lamp from a DC supply
Dispositif de circuit pour le fonctionnement d'une lampe fluorescente à partir d'une source de tension continue

(30) Priorität: 24.03.1990 DE 4009499
(43) Veröffentlichungstag der Anmeldung: 02.10.1991
(73) Patentinhaber: ABB PATENT GmbH, 68309 Mannheim (DE)
(72) Erfinder: Jütte, Reinhold, W-3538 Marsberg 9 (DE)
(74) Vertreter: Fritsch, Klaus

(56) Entgegenhaltungen:
- EP-A- 0 147 881
- EP-A- 0 185 179
- EP-A- 0 294 605
- DD-A- 258 886
- DE-A- 2 205 574
- DE-A- 3 031 322
- FR-A- 2 398 427

## Beschreibung

Die Erfindung bezieht sich auf eine Schaltungsanordnung zum Betrieb einer Leuchtstofflampe aus einer Gleichspannungsquelle unter Verwendung eines transistorgesteuerten Gegentaktresonanzkreiswandlers nach dem Oberbegriff des Anspruchs 1.

Eine solche Schaltungsanordnung ist aus der FR-A-2 398 427 bekannt.

Ähnliche Wandlerschaltungen sind bekannt aus EP-A-0 147 881, der ein Wandler mit einer vom Wandlertrafo getrennten Induktanz zwischen Pluspol und Primärwicklung des Transformators zu entnehmen ist, der DE-A-2 205 574, in deren Schaltung ein Basisanschluß eines der Transistoren über die Reihenschaltung eines Widerstands und eines Kondensators mit dem Pluspol der Gleichspannungsquelle verbunden ist, und EP-A-0 294 605, in deren Schaltungsanordnung Basisanschlüsse der Transistoren über eine Reihenschaltung einer Wicklung und eines Widerstands mit dem Pluspol der Gleichspannungsquelle verbunden sind.

Es hat sich gezeigt, daß an den Transistoren der bekannten Schaltungsanordnungen hohe Spannungsspitzen auftreten, die durch die Streuinduktivität des Transformators verursacht sind.

Der Erfindung liegt die Aufgabe zugrunde, eine Schaltungsanordnung zum Betrieb einer Leuchtstofflampe aus einer Gleichspannungsquelle unter Verwendung eines transistorgesteuerten Gegentaktresonanzkreiswandlers anzugeben, bei der störende Einflüsse der Streuinduktivität des Wandlertransformators deutlich verringert sind.

Diese Aufgabe wird bei einer Schaltungsanordnung nach dem Oberbegriff des Anspruchs 1 durch dessen kennzeichnende Merkmale gelöst.

Vorteilhafte Ausgestaltungen sind in abhängigen Ansprüchen angegeben.

Vorteile der Schaltungsanordnung bestehen insbesondere darin, daß mit geringem Bauteileaufwand gute elektrische Eigenschaften erzielt werden. Die Schaltung führt zu einem weitgehend konstanten Stromfluß, wodurch die Bauelemente nur für relativ kleine Spannungen und Ströme ausgelegt werden müssen.

Weitere Vorteile und vorteilhafte Ausgestaltungen sind im Rahmen nachstehender Beschreibung eines Ausführungsbeispiels angegeben, welches in der Zeichnung dargetellt ist.

Es zeigt:
- Figur 1: erfindungsgemäße Schaltungsanordnung,
- Figur 2: Anordnung der Wicklungen auf dem Transformator.

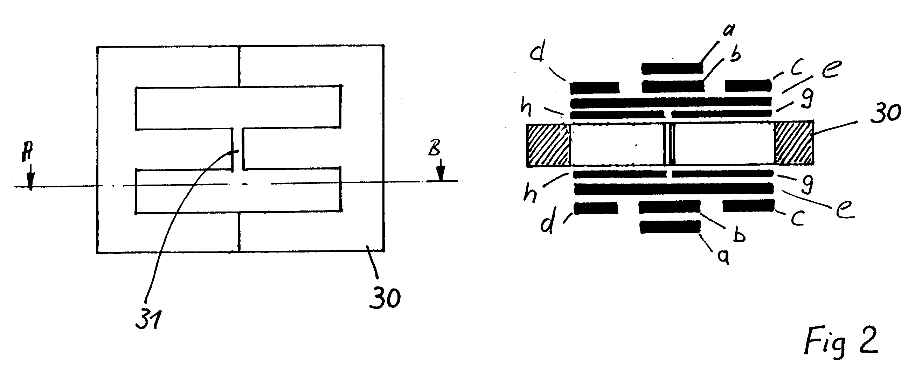

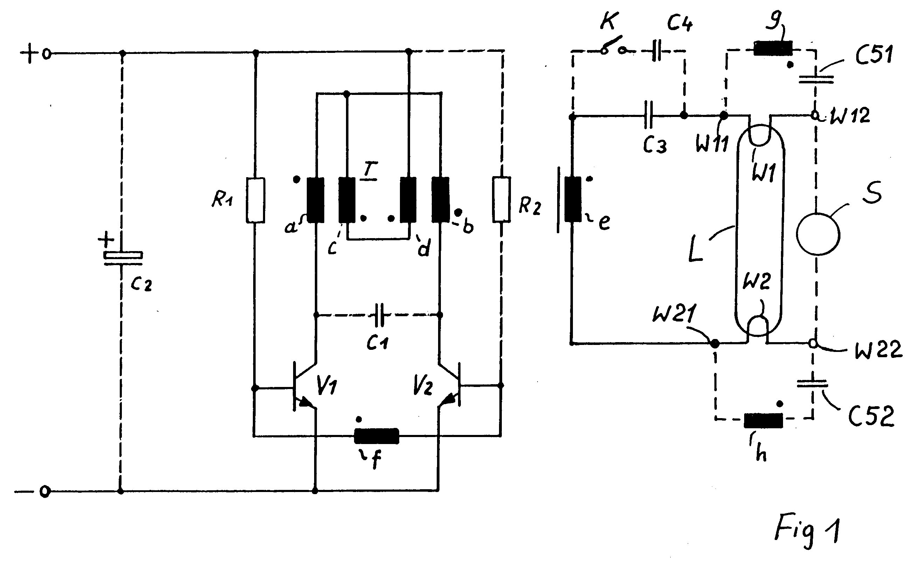

Figur 1 zeigt mit ausgezogenen Linien eine Schaltungsanordnung mit minimalem Bauteileaufwand, und mit gestrichelten Linien vorteilhafte Ausgestaltungen.

In der Schaltungsanordnung ist eine Leuchtstofflampe L dargestellt, welche aus einer Gleichspannungsquelle versorgt werden soll. Die Gleichspannung wird über mit Pluspol und Minuspol bezeichnete Anschlußklemmen in die Schaltungsanordnung eingespeist. Zur Siebung der Gleichspannung ist zweckmäßig ein Elektrolyt-Kondensator C2 anzuordnen.

Die Schaltungsanordnung enthält einen Transformator T mit zwei Primärwicklungen a, b, zwei Wicklungen c, d, eine Rückkopplungswicklung f, einer Sekundärwicklung e und gegebenenfalls zwei Heizwicklungen g, h. Die Wicklungen a bis h sind vorzugsweise auf E-E-Ferritkernen aufgebracht, wobei die Anordnung einen Luftspalt im Kern aufweist. Die Polarität der Primärwicklungen a, b ist gegensinnig zueinander und die Wicklungen c, d sind gleichsinnig zueinander geschaltet. Die Wicklungen c, d werden auch als Streuwicklungen bezeichnet. In Figur 2 ist eine bevorzugte räumliche Anordnung der Wicklungen a bis h auf einem Transformatorkern 30, der einen Luftspalt 31 aufweist, dargestellt. Im linken Teil der Figur 2 ist eine Schnittebene A-B durch den Kern 30 eingezeichnet. Der rechte Teil der Figur 2 zeigt den in der Ebene A-B geschnittenen Kern 30 und die räumliche Anordnung der Wicklungen a bis h.

Die erste Primärwicklung a ist mit dem Kollektor eines ersten Transistors V1 verbunden, die zweite Primärwicklung mit dem Kollektor eines zweiten Transistors V2. Die Emitter der beiden Transistoren V1, V2 sind mit dem Minuspol verbunden. Die zweiten Anschlüsse der Primärwicklungen a, b sind miteinander und über eine Reihenschaltung der beiden Wicklungen c, d mit dem Pluspol der Schaltung verbunden.

Die Basis des ersten Transistors V1 ist über einen ersten Widerstand R1 mit dem Pluspol der Schaltung verbunden und außerdem über die Rückkopplungswicklung f mit der Basis des zweiten Transistors V2. Die Basis des Transistors V2 ist über einen zweiten Widerstand R2 mit dem Pluspol der Schaltung verbunden. Die Widerstände R1, R2 dienen dem sicheren Anschwingen des Wandlers und der Aufrechterhaltung der Schwingung. Einer der beiden Widerstände R1 und R2 kann auch eingespart werden, da in der Praxis die Bedingung für das Wandler-Schwingen auch dann erfüllt ist. Die Kollektoren der beiden Transistoren V1, V2 sind über einen Schwingkreiskondensator C1 miteinander verbunden. Wenn die parasitären Kapazitäten der Transformatorwicklungen a bis d ausreichend groß sind, so daß die Schaltung auch ohne den Schwingkreiskondensator C1 einwandfrei schwingt, kann auf den Kondensator C1 verzichtet werden.

Die Sekundärwicklung e des Transformators T ist über einen sekundärseitigen Kondensator C3 mit ersten Anschlüssen W11, W21 der Heizwendel W1, W2 der Leuchtstofflampe L verbunden.

Wenn an die dargestellte Schaltungsanordnung eine Gleichspannung angelegt wird, wird aufgrund einer immer vorhandenen Unsymmetrie, z.B. durch eine unterschiedliche Stromverstärkung der Transistoren V1, V2, einer der beiden Transistoren V1, V2 über einen der Widerstände R1, R2 leitend gesteuert. Beispielsweise kann der erste Transistor V1 zuerst leitend werden und die erste Primärwicklung über die Wicklungen c, d an die Gleichspannung anschalten. Der Schwingkreiskondensator C1 (der auch in Form einer parasitären Kapazität vorhanden sein kann) lädt sich dann so auf, daß die mit dem Kollektor des ersten Transistors V1 verbundene Seite des Kondensators C1 negativ geladen ist. Der Kondensator C1 bildet zusammen mit der Induktivität der Primärwicklungen a, b sowie deren eigenen Streuinduktivität einen Schwingkreis. Die Spannung am Kondensator C1 und damit an den Primärwicklungen a, b nimmt den Verlauf einer positiven Sinus-Halbwelle bis die Spannung zu Null wird. In diesem Zeitpunkt hat auch die Spannung an der Rückkopplungswicklung f den Wert Null. Die Schwingung setzt sich im Schwingkreis weiter fort und schwingt somit in den negativen Bereich um. Die Polarität der Rückkopplungswicklung f ist so geschaltet, daß diese dann dem ersten Transistor V1 den Basisstrom entzieht, damit der Transistor V1 sperrt. Gleichzeitig wird von der Rückkopplungswicklung f der Basisstrom für den zweiten Transistor V2 freigegeben, so daß dieser einschaltet. Die Spannug am Kollektor des zweiten Transistors V2 ist dabei Null. Zuvor hatte der erste Transistor V1 ebenfalls bei Spannung Null ausgeschaltet. Da jetzt der zweite Transistor V2 leitet, steigt die Spannung am Kollektor des ersten Transistors V1 an, und zwar sinusförmig ohne jede Spannungsspitze und ohne ein Überschwingen.

Die Spannung am ersten Transistor V1 steigt auf maximal den vierfachen Wert der an den Anschlußklemmen der Schaltung angelegten Gleichspannung. Der zweite Transistor V2 ist leitend und setzt den zum ersten Transistor V1 beschriebenen Schwingungsvorgang fort, allerdings mit umgekehrtem Vorzeichen. Da die Transistoren V1 und V2 beim Spannungswert Null ein- bzw. ausschalten, treten nur sehr geringe Schaltverluste auf. Der elektrische Wirkungsgrad des Gegentaktresonanzwandlers ist dadurch hoch.

Nach dem Einschalten des Wandlers steht an der Sekundärwicklung e eine hohe sinusförmige Wechselspannung an, die über den sekundärseitigen Kondensator C3 der Leuchtstofflampe L zugeführt wird, wodurch die Lampe L zündet. Der Lampenstrom wird durch den sekundärseitigen Kondensator C3 begrenzt.

Solange die Lampe L noch nicht gezündet hat, schwingt der Wandler mit einer relativ hohen Frequenz, z.B. 70 Khz. Wenn die Lampe L brennt, wird der aus den Induktivitäten der Wicklungen a bis d mit dem Schwingkreiskondensator C1 gebildete Resonanzkreis durch die Induktivität der Sekundärwicklung e und den sekundärseitigen Kondensator C3 verstimmt, so daß der Wandler mit einer niedrigeren Frequenz, z.B. 30 Khz schwingt. Trotz sich ändernder Schwingfrequenz ist aber sichergestellt, daß sich der Wandler bei allen Betriebsbedingungen, wie z.B. Leerlauf, Vollast und Kurzschluß auf einen optimalen Betriebspunkt einstellt und die Transistoren in nahezu idealer Weise schalten. Im Leerlauf oder im Fall eines Kurzschlusses am Ausgang sinkt die aus der Gleichspannungsquelle aufgenommene Leistung auf 10 bis 20 % des Nennwertes, ohne daß es dazu einer besonderen Schutzmaßnahme bedürfte.

Es wurde festgestellt, daß die Form der durch die Transistoren V1, V2 fließenden Ströme günstig durch das Verhältnis der Induktivität, des Wicklungssinns und der räumlichen Anordnung der Wicklungen c, d zur Induktivität der Primärwicklung a oder b beeinflußt werden kann. Das Verhältnis der Induktivitäten sollte etwa 5 : 1 sein. Die Wicklungen können z.B. Wicklung c links-, Wicklung d rechtsbündig gewickelt werden.

Die beschriebene Schaltungsanordnung kann durch unterschiedliche Maßnahmen ergänzt oder verändert werden.

Um einen an sich bekannten Warmstart der Leuchtstofflampe L mit vorgeheizten Elektroden zu ermöglichen, können auf den Transformator T zwei Heizwicklungen g, h angeordnet werden, welche den erforderlichen Heizstrom liefern.

Wird der Heizstrom aus diesen Heizwicklungen g, h jeweils über einen Heizkondensator C51, C52 den Heizwendeln W1, W2 zugeführt, so fließt vor dem Zünden wegen der hohen Schwingkreisfrequenz und damit auch hohen Frequenz des Heizstromes über den Heizkondensator C51 bzw. C52 ein höherer Strom als bei brennender Lampe L. Da die Schwingkreisfrequenz nach dem Zünden der Lampe L kleiner wird und der Widerstand des Kondensators C51, C52 frequenzabhängig ist, wird der Heizstrom bei brennender Lampe in vorteilhafter Weise reduziert.

Eine weitere Anordnung zum Warmstart der Lampe kann durch Anordnen eines Starters S zwischen zweiten Anschlüssen W12, W22 der Heizwendel W1, W2 realisiert werden. Der Starter S kann in unterschiedlicher Weise ausgestaltet sein. Außer einem üblichen Glimmstarter ist auch ein Starter auf der Basis eines Halbleiterschalters, z.B. Bipolartransistors, MOSFets, IGBT's, Triacs oder Thyristors verwendbar. Weiterhin ist als Starter S ein Kaltleiter verwendbar, der beim Start niederohmig ist und die Heizwendel W1, W2 der Lampe L heizt. Durch Eigenerwärmung wird der Kaltleiter dann hochohmig, so daß der Heizstrom reduziert wird. Als Starter S kann auch ein Schaltkontakt eines zeitgesteuerten Relais dienen. Bei Verwendung eines Starters S sind keine Heizwicklungen g, h und Kondensatoren C51, C52 angeordnet.

Mit Hilfe eines in der Zeichnung dargestellten Relaiskontaktes K oder eines anderen Schalters kann auch in der Startphase oder, wenn eine höhere Lampenleistung gewünscht wird, parallel zum sekundären Kondensator C3 ein Zusatzkondensator C4 geschaltet werden, wodurch ein höherer Strom im Sekundärkreis fließt. Dadurch wird auch der Lichtstrom der Lampe erhöht.

## Patentansprüche

1. Schaltungsanordnung zum Betrieb einer Leuchtstofflampe aus einer Gleichspannungsquelle unter Verwendung eines Gegentaktresonanzkreiswandlers, wobei der Gegentaktresonanzkreiswandler als selbstschwingender Wandler ausgeführt ist, und wobei der Gegentaktresonanzkreiswandler zwei Transistoren (V1,V2), einen Transformator (T) und wenigstens einen Widerstand (R1) aufweist, wobei
- der Transformator (T) auf seinem Kern (30) zwei Primärwicklungen (a,b), eine Sekundärwicklung (e) und eine Rückkopplungswicklung (f) trägt,
- die Emitter der beiden Transistoren (V1,V2) mit dem Minuspol der Gleichspannungsquelle verbunden sind,
- die Basisanschlüsse der beiden Transistoren (V1,V2) über die Rückkopplungswicklung (f) miteinander verbunden sind,
- die Kollektoren der beiden Transistoren (V1,V2) über die in Reihe geschalteten Primärwicklungen (a,b) miteinander verbunden sind, und
- die Sekundärwicklung (e) über eine Reihenschaltung eines sekundärseitigen Kondensators (C3) und der Leuchtstofflampe (L) verbunden ist,
dadurch gekennzeichnet, daß
a) der Transformator (T) auf seinem Kern (30) zwei gleichsinnig gewickelte, räumlich gegeneinander versetzt angeordnete zusätzliche Wicklungen (c,d) trägt, deren Wicklungsanfänge miteinander verbunden sind, wobei das Wicklungsende der ersten zusätzlichen Wicklung (c) an die Verbindungsstelle der beiden Primärwicklungen (a,b) angeschlossen ist und das Wicklungsende der zweiten zusätzlichen Wicklung (d) an den Pluspol der Gleichspannungsquelle angeschlossen ist, und
b) der wenigstens eine Widerstand (R1) zwischen die Basis eines der Transistoren (V1) und den Pluspol der Gleichspannungsquelle geschaltet ist.

2. Schaltungsanordnung nach Anspruch 1, dadurch gekennzeichnet, daß die Kollektoranschlüsse der Transistoren (V1,V2) durch einen Schwingkreiskondensator (C1) miteinander verbunden sind.

3. Schaltungsanordnung nach Anspruch 1 oder 2, dadurch gekennzeichnet, daß die Basisanschlüsse beider Transistoren (V1,V2) über je einen Widerstand (R1,R2) mit dem Pluspol der Gleichspannungsquelle verbunden sind.

4. Schaltungsanordnung nach einem der vorstehenden Ansprüche, dadurch gekennzeichnet, daß der Transformator (T) zwei zusätzliche Heizwicklungen (g,h) enthält, welche einen Heizstrom für die Heizwendel (W1,W2) in der Leuchtstofflampe (L) liefern, um einen Warmstart der Leuchtstofflampe (L) zu möglichen.

5. Schaltungsanordnung nach Anspruch 4, dadurch gekennzeichnet, daß die Heizwendel (W1,W2) der Leuchtstofflampe (L) jeweils durch Reihenschaltung mit einem Kondensator (C51,C52) mit den Heizwicklungen (g,h) verbunden sind.

6. Schaltungsanordnung nach einem der vorstehenden Ansprüche, dadurch gekennzeichnet, daß die nicht mit der Sekundärwicklung (e) bzw. dem sekundärseitigen Kondensator (C3) verbundenen Anschlüsse (W12,W22) der Heizwendel (W1,W2) über einen Starter (S) miteinander verbunden sind, wobei der Starter als Glimmstarter, als Starter mit einem Halbleiterschalter, als Kaltleiter oder als Schaltkontakt eines zeitgesteuerten Relais ausgeführt sein kann.

7. Schaltungsanordnung nach einem der Ansprüche 1 bis 5, dadurch gekennzeichnet, daß die nicht mit der Sekundärwicklung (e) bzw. dem sekundärseitigen Kondensator (C3) verbundenen Anschlüsse (W12,W22) der Heizwendel (W1,W2) über einen Kondensator miteinander verbunden sind.

8. Schaltungsanordnung nach einem der vorstehenden Ansprüche, dadurch gekennzeichnet, daß ein Zusatzkondensator (C4) während des Starts oder bei erhöhtem Leistungsbedarf der Leuchtstofflampe (L) oder erhöhtem Lichtstrombedarf mittels eines Schaltkontaktes (K) parallel zum sekundärseitigen Kondensator (C3) schaltbar ist.

9. Schaltungsanordnung nach einem der vorstehenden Ansprüche, dadurch gekennzeichnet, daß der Transformatorkern aus einer Anordnung von zwei je einen E-Schnitt aufweisenden Ferritkernteilen besteht, wobei in der Anordnung ein Luftspalt vorhanden ist.

## Claims

1. Circuit arrangement for operating a fluorescent lamp from a d.c. voltage source using a push-pull oscillatory circuit converter, the push-pull oscillatory circuit converter being designed as a self-oscillating, and the push-pull oscillatory circuit converter having two transistors (V1, V2), a transformer (T) and at least one resistor (R1), where
- the transformer (T) bears on its core (30) two primary windings (a, b), a secondary winding (e) and a feedback winding (f),
- the emitters of the two transistors (V1, V2) are connected to the negative pole of the d.c. voltage source,
- the base connections of the two transistors (V1, V2) are connected to one another via the feedback winding (f),
- the collectors of the two transistors (V1, V2) are connected to one another via the primary windings (a, b) which are connected in series, and
- the secondary winding (e) is connected via a series connection of a secondary-side capacitor (C3) and the fluorescent lamp (L),
characterized in that
a) the transformer (T) bears on its core (30) two additional windings (c, d) which are wound in the same direction and are arranged spatially offset with respect to one another and the beginnings of which are connected to one another, the end of the first additional winding (c) being connected to the connection point of the two primary windings (a, b) and the end of the second additional winding (d) being connected to the positive pole of the d.c. voltage source, and
b) the at least one resistor (R1) is connected between the base of one of the transistors (V1) and the positive pole of the d.c. voltage source.

2. Circuit arrangement according to Claim 1, characterized in that the collector connections of the transistors (V1, V2) are connected to one another via an oscillatory circuit capacitor (C1).

3. Circuit arrangement according to Claim 1 or 2, characterized in that the base connections of both transistors (V1, V2) are connected to the positive pole of the d.c. voltage source via in each case one resistor (R1, R2).

4. Circuit arrangement according to one of the preceding claims, characterized in that the transformer (T) contains two additional heating windings (g, h) which supply a heating current for the heating coil (W1, W2) in the fluorescent lamp (L) in order to permit warm starting of the fluorescent lamp (L).

5. Circuit arrangement according to Claim 4, characterized in that the heating coil (W1, W2) of the fluorescent lamp (L) are [sic] connected to the heating windings (g, h) in each case by means of a series connection with a capacitor (C51, C52).

6. Circuit arrangement according to one of the preceding claims, characterized in that the connections (W12, W22), which are not connected to the secondary winding (e) or to the secondary-side capacitor (C3), of the heating coil (W1, W2) are connected to one another via a starter (S), it being possible for the starter to be designed as a glow starter, as a starter with a semiconductor switch, as a PTC resistor or as a switching contact of a timed relay.

7. Circuit arrangement according to one of Claims 1 to 5, characterized in that the connections (W12, W22), which are not connected to the secondary winding (e) or to the secondary-side capacitor (C3), of the heating coil (W1, W2) are connected to one another via a capacitor.

8. Circuit arrangement according to one of the preceding claims, characterized in that a supplementary capacitor (C4) can be connected in parallel to the secondary-side capacitor (C3) by means of a switching contact (K) during starting or in the case of increased power drain of the fluorescent lamp (L) or increased lighting current drain.

9. Circuit arrangement according to one of the preceding claims, characterized in that the transformer core consists of an arrangement of two ferrite core parts which each have one E section, an air gap being present in the arrangement.

## Revendications

1. Agencement de circuit pour faire fonctionner une lampe à fluorescence à partir d'une source de tension continue, utilisant un convertisseur à circuit de résonance symétrique, le convertisseur à circuit de résonance symétrique étant agencé sous forme de convertisseur auto-oscillaant et le convertisseur à circuit de résonance symétrique comportant deux transistors (V1, V2), un transformateur (T) et au moins une résistance (R1),
- le transformateur (T) portant sur son noyau (30) deux enroulements primaires (a, b), un enroulement secondaire (e) et un enroulement de réaction (f),
- les émetteurs des deux transistors (V1, V2) étant connectés au pôle négatif de la source de tension continue,
- les bornes des bases de deux transistors (V1, V2) étant connectées entre elles par l'intermédiaire de l'enroulement de réaction (f),
- les collecteurs des deux transistors (V1, V2) étant connectés entre eux par l'intermédiaire des enroulements primaires (a, b) branchés en série et
- l'enroulement secondaire (e) étant connecté par l'intermédiaire d'un circuit série formé d'un condensateur (C3) côté secondaire et de la lampe à fluorescence (L),
caractérisé par le fait que
a) le transformateur (T) porte sur son noyau (30) deux enroulements (c, d) supplémentaires enroulés dans le même sens, mais mutuellement décalés, dont les origines sont connectées entre elles, la fin du premier enroulement (c) supplémentaire étant connectée au point de connexion des deux enroulements primaires (a, b) et la fin du deuxième enroulement (d) supplémentaire étant connectée au pôle positif de la source de tension continue, et
b) la résistance (R1), au nombre d'au moins une, étant branchée entre la base de l'un des transistors (V1) et le pôle positif de la source tension continue.

2. Agencement de circuit selon la revendication 1, caractérisé par le fait que les bornes des collecteurs des transistors (V1, V2) sont connectées entre elles par un condensateur (C1) de circuit résonnant.

3. Agencement de circuit selon la revendication 1 ou la revendication 2, caractérisé par le fait que les bornes des bases des deux transistors (V1, V2) sont connectées chacune par l'intermédiaire d'une résistance (R1, R2) au pôle positif de la source de tension continue .

4. Agencement de circuit selon l'une des revendications précédentes, caractérisé par le fait que le transformateur (T) comporte deux enroulements (g, h) supplémentaires qui délivrent un courant de chauffage pour les filaments de chauffage (W1, W2) à l'intérieur de la lampe à fluorescence (L), ceci aux fins de permettre un démarrage à chaud de la lampe à fluorescence (L).

5. Agencement de circuit selon la revendication 4, caractérisé par le fait que les filaments de chauffage (W1, W2) de la lampe à fluorescence (L) sont connectés aux enroulements de chauffage (g, h) chacun par branchement en série avec un condensateur (C51, C52).

6. Agencement de circuit selon l'une des revendications précédentes, caractérisé par le fait que les bornes (W12, W22) des filaments de chauffage (W1, W2) qui ne sont pas connectées à l'enroulement secondaire (e) ou au condensateur (C3) côté secondaire sont connectées entre elles par l'intermédiaire d'un starter (S), le starter pouvant se présenter sous la forme d'un starter à incandescence, d'un starter à commutateur à semi-conducteur, d'un conducteur froid ou d'un contact à relais temporisé.

7. Agencement de circuit selon l'une des revendications 1 à 5, caractérisé par le fait que les bornes (W12, W22) des filaments de chauffage (W1, W2) qui ne sont pas connectées à l'enroulement secondaire (e) ou au condensateur (C3) côté secondaire sont connectées entre elles par l'intermédiaire d'un condensateur.

8. Agencement de circuit selon l'une des revendications précédentes, caractérisé par le fait que, pendant le démarrage ou lors d'un appel de puissance supplémentaire de la lampe à fluorescence (L) ou d'un appel d'intensité supplémentaire, un condensateur supplémentaire (C4) peut être connecté en parallèle avec le condensateur (C3) côté secondaire au moyen d'un contact de commutation (K).

9. Agencement de circuit selon l'une des revendications précédentes, caractérisé par le fait que le noyau du transformateur se compose d'un assemblage de deux parties de noyau en ferrite à section en forme de E, un entrefer étant prévu dans l'assemblage.
